# FASCICULE DE BREVET EUROPEEN

(11) **EP 1 595 399 B1**
(45) Date de publication et mention de la délivrance du brevet: **22.11.2006**
(21) Numéro de dépôt: 04706694.9
(22) Date de dépôt: 30.01.2004
(51) Int. Cl.: H04N 7/16, H04N 7/167

(54) **SYSTEME DE TELEVISION A PEAGE, PROCEDE DE REVOCATION DE DROITS DANS UN TEL SYSTEME, DECODEUR ET CARTE A PUCE ASSOCIES, ET MESSAGE TRANSMIS A UN TEL DECODEUR**
PAY-FERNSEHEN, VERFAHREN ZUM ENTZIEHEN VON RECHTEN IN EINEM SOLCHEN SYSTEM, ASSOZIIERTER DECODER UND CHIPKARTE UND AN EINEN SOLCHEN DECODER ÜBERTRAGENE NACHRICHT
PAY TELEVISION, METHOD FOR REVOKING RIGHTS IN SUCH A SYSTEM, ASSOCIATED DECODER AND SMART CARD, AND MESSAGE TRANSMITTED TO SUCH A DECODER

(30) Priorité: 04.02.2003 FR 0301243
(43) Date de publication de la demande: 16.11.2005
(73) Titulaire: Canal + Technologies, 75015 Paris (FR)
(72) Inventeur: DAUVOIS, Jean-Luc, F-75116 Paris (FR)
(74) Mandataire: Weihs, Bruno Konrad
(86) Numéro de dépôt international: PCT/EP2004/050060
(87) Numéro de publication internationale: WO 2004/071087

(56) Documents cités:
- US-A- 5 461 675
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

**DOMAINE TECHNIQUE**

La présente invention concerne un système de télévision à péage, un procédé de révocation de droits dans un tel système, un décodeur et une carte à puce associés, et un message transmis à un tel décodeur. Dans de tels systèmes de télévision à péage, deux modes très connus de distribution de programmes audiovisuels peuvent exister soit séparément soit conjointement.

Un premier mode fait de l'abonnement et/ou du paiement un prérequis à l'accès en clair aux programmes audiovisuels. Dans ce cas, l'abonné doit s'abonner et payer périodiquement, par exemple tous les mois, une taxe d'abonnement pour accéder aux programmes audiovisuels diffusés sur un ou plusieurs canaux.

Un second mode fait appel à de l'offre de prévisualisation désembrouillé (« descrambled » en terminologie anglo-saxonne) temporaire avant abonnement ou paiement. Dans ce cas l'abonné est informé, par exemple par un message sur son écran, qu'un accès gratuit et en clair (c'est à dire en désembrouillé) à un programme en cours, ou à venir, lui est donné à des fins de prévisualisation, ou l'abonné demande cet accès. L'abonné peut ainsi visualiser en clair temporairement pendant un délai de durée relativement courte un programme sur un canal donné. Si l'abonné souhaite continuer à visualiser le programme, il doit avant l'expiration de ce délai, effectuer une transaction de paiement, par exemple par voie modem, selon un schéma dit de « Pay-Per-View » (payer pour voir) ou « Impulsive Pay-Per-View » (payer pour voir impulsif) par exemple, selon des mécanismes connus de l'homme du métier. Si cette transaction n'est pas réalisée avant l'expiration du délai, alors l'accès gratuit et en clair au programme est interrompu et le programme apparaît alors embrouillé sur l'écran de télévision de l'abonné.

L'invention s'applique en particulier aux deux modes précités, mais est plus particulièrement décrite dans le cadre de ce second mode.

Dans la présente demande, les termes « programme audiovisuel » désignent tout programme vidéo et/ou audio.

**ETAT DE LA TECHNIQUE ANTERIEURE**

Les techniques utilisées en télévision payante sont basées sur deux mécanismes indépendants : d'une part sur un brouillage/cryptage du (ou des) programme(s) vidéo et/ou audio, d'autre part sur une fonction d'allocation de droits commerciaux qui sont transmis comme des messages sécurisés au boîtier de désembrouillage ou au décodeur (avec accès de contrôle). Le brouillage/cryptage peut être appliqué aisément sur un flot de bits numérique. Tous les bits peuvent être brouillés/cryptés en utilisant par exemple un chiffrage par blocs. Le brouillage est utilisé pour des émissions analogiques. En utilisant un tel brouillage le format du signal est changé, les signaux de synchronisation sont supprimés et transmis séparément sous une forme cryptée. Le signal audio peut être converti en un signal numérique puis crypté. Le signal audio numérique crypté peut être inséré dans le signal vidéo.

Le programme audiovisuel transmis est brouillé, ou crypté, en utilisant des clés, lequel programme audiovisuel brouillé, ou crypté ne peut être désembrouillé ou décrypté qu'en utilisant des équivalents de ces clés, appelés mots de contrôle (CW). En mode de cryptage symétrique, les clés de cryptage/brouillage sont égales aux mots de contrôle. En mode de cryptage asymétrique, les clés de cryptage/brouillage sont différentes des mots de contrôle. Pour chaque programme audiovisuel donné, les valeurs de mot de contrôle transmis vers les décodeurs changent périodiquement à une fréquence relativement élevée, par exemple de l'ordre de la seconde. Pour permettre le décryptage en réception du programme audiovisuel, des messages ECM de contrôle d'allocation de droits ("Entitlement Control Messages") et des messages EMM de gestion d'allocation de droits ("Entitlement Management Messages") sont transmis vers les décodeurs.

Ces deux types de messages ECM et EMM peuvent être envoyés, au travers du décodeur, à une carte à puce ou tout objet portable, tel qu'une carte PCMCIA, une clé à puce..., qui assure notamment des fonctions de décryptage et de stockage de droits d'utilisateur. Dans la présente description le terme « carte » désigne tout objet portable fonctionnant en relation avec le décodeur.

Les messages ECM contiennent des mots de contrôle cryptés, les mots de contrôle permettant au décodeur de désembrouiller/décrypter un programme audiovisuel. Les messages ECM sont transmis à la carte qui décrypte les mots de contrôle cryptés et envoie au décodeur ces mots de contrôle CW. La carte ne réalise l'opération de décryptage des mots de contrôle cryptés que si l'utilisateur est autorisé à accéder an programme de télévision en cours. Pour cela la carte mémorise dans une zone de sa mémoire les droits alloués à l'utilisateur concerné. Ainsi, lorsqu'un utilisateur est associé par abonnement à une carte à puce, l'autorisation d'accès est indiquée par des données d'allocation de droits ("entitlement data") mémorisées dans la carte.

Les messages EMM contiennent des informations qui permettent de mettre à jour les données d'allocation de droits de l'utilisateur, par exemple en modifiant les données mémorisées dans la carte. Dans le cas d'une offre de prévisualisation désembrouillée temporaire et selon la technique antérieure, un premier message EMM est envoyé au décodeur pour offrir à l'abonné temporairement les droits requis pour accéder à un programme sur un canal donné. A défaut de transaction de paiement reçu par le système de gestion des droits de l'Opérateur, un autre message EMM est envoyé pour révoquer ces mêmes droits.

Les messages ECM et EMM ont un champ de signature numérique qui assure l'intégrité du message (par exemple un code de Hash). Ceci permet de détecter toute corruption malveillante ou accidentelle des contenus des messages.

Un message ECM est émis avec le signal brouillé transmis. Il comprend trois champs. Le premier champ contient certains paramètres d'accès. Ces paramètres définissent les conditions dans lesquelles l'accès à un programme de télévision est permis. Ce champ rend, par exemple, possible une appréciation parentale (un code PIN additionnel est alors requis par le décodeur) et une occultation géographique (un film peut ne pas être disponible dans tous les pays européen). Le second champ contient un mot de contrôle sous forme cryptée. Le dernier champ contient des informations de contrôle d'intégrité des données du message ECM concerné.

Un message EMM comprend typiquement quatre champs. Chaque message EMM débute avec un champ adresse pour sélectionner un décodeur individuel. Il y a deux modes d'adressage, l'un pour un décodeur individuel et l'autre pour un groupe de décodeurs. Le second champ contient une allocation de droits pour un utilisateur donné. Le troisième champ contient une clé d'exploitation sous forme cryptée. Le dernier champ contient des informations de contrôle d'intégrité des données du message EMM concerné. Les messages EMM peuvent aussi être utilisés pour envoyer une commande au décodeur. L'émission de messages EMM est généralement le résultat d'une action (abonnement) on d'un défaut d'action (non paiement en mode "Payavec prévisualisation désembrouillé temporaire) de l'utilisateur à l'Opérateur. Ces messages sont en général individuels. Leur contenu est interprété par un décodeur (ou la carte associée) ou par un nombre limité des décodeurs qui sont concernés par ces droits particuliers. Les messages EMM ne sont pas émis de façon synchrone avec le programme de télévision auquel ils s'appliquent. Ils sont transmis à l'avance afin de permettre l'accès à un programme donné d'un utilisateur autorisé. N'importe quel réseau peut être utilisé pour transmettre ces messages EMM au récepteur : modem, courrier ou radiodiffusion.

Pour être sûr qu'un message EMM a été reçu par l'utilisateur, pour renouveler une souscription par exemple, celui-ci est envoyé plusieurs fois. Les messages EMM sont ainsi organisés cycliquement selon une période donnée pour l'émission. La durée d'une telle période définit le temps maximum à attendre pour obtenir une allocation de droit pour un utilisateur qui a coupé son décodeur pendant une longue durée.

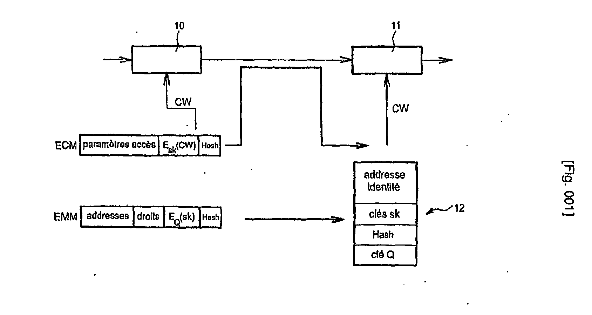

Sur la figure 1 sont ainsi représentés un embrouilleur 10, un désembrouilleur 11 typiquement intégré à un décodeur (non représenté), une carte à puce 12 ainsi que des messages ECM et EMM.

La carte à puce 12 mémorise notamment :

- une adresse de carte, qui est fixe,

- au moins une clé d'exploitation sk, qui est mise à jour périodiquement par EMM,

- une clé unique Q, qui est fixe.

Comme mentionné précédemment, un message ECM contient trois champs contenant respectivement :

- les paramètres d'accès,

- un mot de contrôle crypté par une clé d'exploitation, noté Eₛₖ (CW),

- un champ de contrôle d'intégrité des données (code de Hash) du message ECM considéré.

Un message EMM contient quatre champs contenant respectivement :

- une adresse,

- les droits de l'utilisateur,

- une clé d'exploitation cryptée, noté sk :E_{Q}(sk),

- un mot contrôle d'intégrité des données (code de Hash) du message EMM considéré.

Les mots de contrôle CW successifs sont envoyés à l'embrouilleur 10 et parallèlement an décodeur pour permettre respectivement le brouillage et/ou cryptage et le désembrouillage et/ou décryptage des données transmises.

Ainsi les signaux vidéo et/ou audio peuvent être brouillés en utilisant des mots de contrôle successifs (CW). Périodiquement (par exemple toutes les 10 secondes) un message ECM est émis avec le signal brouillé. Ces messages ECM contiennent les mots de contrôle cryptés par la clé d'exploitation sk actuellement valide et transmise par message EMM pour être stockée dans le décodeur ou la carte (par exemple carte à puce ou carte PCMCIA) qui est associée au décodeur muni d'un lecteur de carte.

Les clés d'exploitation sk sont mises à jour moins fréquemment par des messages EMM, par exemple tous les mois. Les clés d'exploitation sk sont cryptées avec une ou plusieurs clés uniques individuelles Q qui sont mémorisées de façon sûre dans la carte à puce ou le décodeur.

Un problème de sécurité peut se poser dans des systèmes de télévision à péage fonctionnant selon l'un des deux modes présentés en début de description. En effet la révocation des droits d'abonnement à un programme, ou la révocation des droits d'abonné, se fait selon la technique antérieure par l'envoi d'un message abonné EMM (de type message EMM individuel ou EMM unique). Un pirate (ou "hacker") peut vouloir profiter d'un tel fonctionnement pour empêcher qu'une telle révocation ne soit effective après qu'un abonnement ait été souscrit ou qu'une prévisualisation désembrouillée temporaire ait été offerte à l'abonné par l'envoi d'un message EMM d' allocation de droits. Le pirate peut pour cela développer une technique destinée à distinguer les messages ECM des messages EMM. Il peut alors identifier et supprimer par filtrage des messages EMM, en utilisant des "blockers". Une telle technique consiste, par exemple en technologie numérique MPEG ("Moving Picture Expert Group"), à modifier les paramètres de filtrage des filtres MPEG pour ne pas recevoir des messages EMM dès lors qu'un message EMM a été reçu par un décodeur et que les droits d'utilisateurs ont été reçus par le décodeur (ou la carte qui lui est associée) via un message EMM Le pirate peut ainsi par exemple filtrer et rejeter tous les messages EMM une fois qu'une carte a été autorisée à désembrouiller un programme donné rendu accessible en mode de prévisualisation désembrouillé temporaire, grâce à l'envoi préalable de messages EMM appropriés. La suppression de messages EMM ultérieurs, après qu'un accès à un ou des programmes a été autorisé, empêche une modification de l'état d'autorisation.

Les données d'autorisation ne peuvent pas, alors, être modifiées, et un accès non autorisé à tous les programmes véhiculés sur le canal à prévisualisation désembrouillé temporaire est ainsi obtenu pendant une durée égale à la durée de validité des clés d'exploitation stockées dans la carte avant filtrage des messages EMM.

Pour résoudre ce problème le brevet US 5461675, qui décrit un procédé de contrôle d'accès, prévoit une période de temps au cours de laquelle la carte à puce doit recevoir au moins un message EMM, dédié ou non à la carte. Si cette exigence n'est pas satisfaite, la carte à puce ne fournit pas les informations correctes pour le désembrouillage du programme audiovisuel.

L'invention à pour objet de résoudre le problème mentionné ci-dessus par une solution distincte de celle décrite dans le brevet US 5461675 tout en limitant la bande passante requise pour l'envoi des messages.

**EXPOSÉ DE L'INVENTION**

La présente invention propose donc un procédé de révocation de droits d'accès à un programme audiovisuel reçu par un décodeur comprenant des étapes :

- d'émission de deux types de messages vers le décodeur, des premiers messages contenant des mots de contrôle cryptés, chaque mot de contrôle étant utilisé pour désembrouiller, durant une période de temps donné, le signal audiovisuel reçu, des seconds messages comprenant chacun des informations d'allocation de droits de l'utilisateur,

- de décryptage dans le décodeur, ou dans un objet portable qui lui est associé, des premiers messages pour produire des mots de contrôle pour le désembrouillage dudit signal audiovisuel reçu par le décodeur si l'utilisateur est autorisé à accéder aux informations contenues dans celui-ci,

caractérisé par l'émission de troisièmes messages hybrides résultant chacun de la combinaison d'au moins un mot de contrôle crypté, d'une adresse de décodeur et d'une information de révocation de droits.

L'utilisation des messages hybrides (E3M) pour invalider les droits d'abonnement ou les droits d'abonné permet de garantir que la révocation sera reçue (car sans message hybride reçu il n'y a pas de visualisation télévision possible) et supprime donc le type de piratage système mis en évidence ci-dessus.

Le procédé de l'invention permet, également, de réduire la quantité de messages envoyés. Il n'est, en effet, plus nécessaire d'envoyer des messages de gestion d'allocation de droits (EMM) pour supprimer une offre pour un abonné. II est possible de le faire directement en utilisant un message hybride E3M Au-delà des offres d'abonnement elles-mêmes il est possible d'effacer des abonnements (clés, date d'obsolescence, groupe,) pour une résiliation d'abonnement. Avantageusement dans un message hybride, le mot de contrôle est crypté par une clé d'exploitation différente de la clé unique utilisée pour crypter l'adresse de décodeur et l'information de révocation de droits. Avantageusement, on peut utiliser une cryptographie asymétrique.

L'invention concerne également un système de télévision à péage comprenant une unité de gestion des abonnés qui stocke, sous la forme d'une base de données, les identifiants des abonnés et leurs droits, une unité de chiffrement de messages EMM, un système d'autorisation d'abonnés commandé par l'unité de gestion d'abonnés, un compresseur MPEG des programmes audiovisuels, une unité de chiffrement de messages ECM, un embrouilleur/multiplexeur, au moins un décodeur associé à une carte à puce, un serveur de communication, un superviseur relié à l'embrouilleur/multiplexeur et une liaison par satellite, terrestre ou par câble entre l'embrouilleur/multiplexeur et le décodeur, caractérisé en ce qu'il comprend une unité de combinaison de champs de messages EMM et de champs de messages ECM qui comporte, pour chaque canal de programme audiovisuel à péage, une file d'attente de messages EMM de révocation et un multiplexeur, cette unité de combinaison de champs étant disposée à l'entrée de l'embrouilleur/multiplexeur.

L'invention concerne, également, une carte à puce, ou un décodeur, pour traiter des messages hybrides, qui comprend des moyens pour effacer des droits inscrits dans sa mémoire, et décrypter les mots de contrôle cryptés avec la clé d'exploitation courante pour produire des mots de contrôle.

L'invention concerne, enfin, un message transmis à destination d'au moins un décodeur dans un système de télévision à péage comprenant au moins :

- un champ de mot de contrôle crypté, un mot de contrôle étant destiné à désembrouiller, durant une période de temps donné, un signal audiovisuel reçu par le décodeur;

- un champ d'adresse de décodeur, et

- un champ de révocation de droits alloués à un (ou à des) décodeur(s) adressé(s) par une adresse dans ledit champ d'adresse.

**BRÈVE DESCRIPTION DES DESSINS**

La figure 1 illustre un système de codage-décodage de l'art connu fonctionnant dans le domaine de la télévision numérique ;

La figure 2 montre un schéma d'architecture générale de système de télévision à péage ; et

La figure 3 est un bloc-diagramme d'une unité de combinaison de champs selon l'invention incluse dans un multiplexeur de l'architecture de la figure 2.

**EXPOSÉ DÉTAILLÉ DE MODES DE RÉALISATION PARTICULIERS**

Dans le procédé de l'invention, la suppression des droits d'accès à au moins un canal véhiculant des programmes à prévisualisation désembrouillé temporaire est réalisée à l'aide de message d'un troisième type, notés E3M, distincts des messages ECM et EMM.

Ces messages E3M transmis à destination d'au moins un décodeur dans le système de télévision à péage comprennent au moins :

- un champ de mot de contrôle crypté,

- un champ d'adresse de décodeur, et

- un champ de révocation de droits allouées à un (aux) décodeur(s) adressé(s) par une adresse unique/groupée dans le champ d'adresse.

Chaque message hybride comprend, en outre, typiquement un champ d'en-tête d'identifiant ECM différent d'un champ d'en-tête d'identifiant D'EMM. De tels champs d'en-tête d'identifiant permettent de distinguer, en réception les messages ECM et EMM.

Le fait de révoquer des droits d'accès à un canal véhiculant des programmes à prévisualisation désembrouillé temporaire dans des messages E3M incluant chacun à la fois un mot de contrôle et une information de révocation de droits limite le piratage car le pirate ne peut pas utiliser un "blocker" sous peine de ne plus accéder quasi instantanément au programme en cours, car bloquant ainsi tout accès aux mots de contrôle utilisés pour le désembrouillage du programme audiovisuel brouillé.

En effet, un abonné accédant, à sa demande ou sur offre, à un programme à prévisualisation désembrouillé temporaire (ou programme) à un instant donné to et l'ayant annulé, sur requête explicite ou par défaut de transaction, à un instant to + Δt (Δt pouvant être un délai très court) pour ne pas payer cette offre pouvait, auparavant, utiliser un "blocker EMM" sur les messages EMM suivants pour visualiser gratuitement l'offre demandée (pendant un délai maximal de deux cycles de reconduction EMM car typiquement la carte portable mémorise deux clés d'exploitation : la clé courante et la clé future).

Il n'est plus possible d'utiliser un "blocker de messages E3M" car bloquer les messages E3M revient à s'interdire de visualiser les programmes demandés.

Le retrait des offres commerciales (ou résiliation d'abonnement) est obtenu au moyen des messages E3M. Chaque message E3M résulte de la combinaison de certaines informations véhiculées par des messages ECM et de certaines informations véhiculées par messages EMM, à savoir que chaque message E3M comprend au moins un mot de contrôle crypté, une adresse de décodeur et une information de révocation de droits.

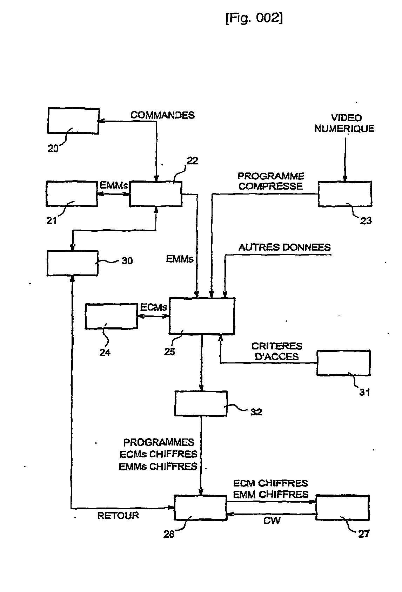

Comme représenté sur la figure 2, une architecture donnée à titre d'exemple d'un système de télévision à péage comprend une unité de gestion des abonnés (SMS) 20 qui stocke sous la forme d'une base de données les identifiants des abonnés et leurs droits, une unité de chiffrement de messages EMM 21, un système d'autorisation d'abonnés 22 commandé par l'unité SMS 20, un compresseur MPEG des programmes audiovisuels 23, une unité de chiffrement de messages ECM 24, un embrouilleur/multiplexeur 25, des décodeurs 26 associés à des cartes à puce ("SmartCard") respectives 27, un serveur de communication 30 relié au système d'autorisation d'abonnés 22 et aux décodeurs 26, un superviseur 31 relié à l'embrouilleur/multiplexeur 25, et une liaison 32 par satellite, terrestre ou par câble entre l'embrouilleur/multiplexeur 25 et les décodeurs 26. Une description détaillée du fonctionnement de ce type de système est donnée, par exemple, dans la demande de brevet WO98/43430.

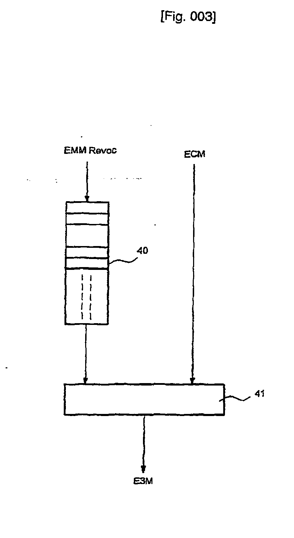

Comme représenté sur la figure 3, l'unité de combinaison de champs de messages EMM et de champ de messages ECM comprend, typiquement pour chaque canal de programme audiovisuel à péage, une file d'attente d'EMM de révocation 40, ainsi qu'un multiplexeur 41. Cette unité de combinaison de champs est typiquement disposée à l'entrée de l'embrouilleur/multiplexeur 25 de la figure 2.

La synchronisation des messages ECM avec le programme embrouillé est critique et les messages ECM ne peuvent dont pas être retardés dans les files d'attente.

Typiquement, pour un canal donné, dès lors qu'un message EMM de révocation est produit, il est stocké dans la file d'attente 40. Dès lors qu'un message ECM est produit (typiquement à une fréquence de l'ordre de la seconde), un multiplexage s'opère pour combiner certains champs de message EMM de révocation et de message ECM, pour produire un message hybride E3M. Un tel message E3M, en sortie du multiplexeur 41, comprend typiquement :
- un champ de mot de contrôle crypté, issu d'un message ECM,
- un champ d'adresse de décodeur issu d'un message EMM de révocation, et

- un champ de révocation de droits allouées au décodeur ou à l'ensemble de décodeurs adressé(s) par une adresse dans ledit champ d'adresse, issu de ce même message EMM.

En effet, les messages EMM peuvent être des messages uniques, individuels ou de groupe.

Etant donné le cycle de changement des messages ECM, compris entre 2 et 10 secondes, il est possible d'avoir un cycle par heure de 300 à 1800 modifications différentes.

Pour éviter un piratage de la part d'un utilisateur concurrent qui aurait la connaissance des clés d'exploitation (piratage qui consisterait à envoyer des messages d'effacement correctement signés) on peut réaliser cet effacement via un message EMM, signé par la clé unique Q de l'abonné, inclus dans un message ECM (signé et authentifié) utilisant une clé d'exploitation.

La contrainte principale du procédé de l'invention correspond à la taille globale de chaque message ECM, et aussi à la durée de traitement des contenus de ces messages ECM.

Mais une telle contrainte n'est aujourd'hui pas gênante. La taille des messages ECM peut en effet atteindre 256 octets (sans utiliser de mode de chaînage), et les mémoires dynamiques RAM existant dans les cartes à puce sont largement suffisantes.

De plus, la vitesse des processeurs (CPU) et l'utilisation de cryptoprocesseurs permettent d'obtenir un temps de traitement adéquat.

Pour interdire toute attaque système en provenance d'un utilisateur concurrent on utilise une cryptographie de type asymétrique : En effet cet utilisateur ne peut alors générer des messages EMM ou ECM acceptés par les cartes à puce des abonnés s'il n'a pas cassé auparavant les clés asymétriques. On peut ainsi utiliser des algorithmes de type RSA ou courbes elliptiques : des algorithmes de ce dernier type ont l'avantage de prendre moins de place en mémoire et de permettre d'avoir des contenus utiles de messages plus importants.

II est à noter que selon l'invention, la carte à puce est apte à traiter trois types de messages, à savoir de manière conventionnelle :
- traiter les messages EMM pour prendre en compte les modifications des droits d'abonné et de clé d'exploitation qu'elle stocke dans sa mémoire protégée,
- décrypter les mots de contrôle cryptés des messages ECM avec la clé d'exploitation courante pour produire des mots de contrôle, et

selon l'invention :
- traiter les messages hybrides E3M pour révoquer des droits préalablement alloués par effacement de droits inscrits dans sa mémoire, et décrypter les mots de contrôle cryptés des messages E3M avec la clé d'exploitation courante pour produire des mots de contrôle.

Une telle fonction peut également en tout ou en partie être incluse dans le décodeur en lieu et place de la carte.

## Revendications

1. Procédé de révocation de droits d'accès à un programme audiovisuel reçu par un décodeur (11) comprenant des étapes :
- d'émission de deux types de messages vers le décodeur, des premiers messages (ECM) contenant des mots de contrôle cryptés, chaque mot de contrôle (CW) étant utilisé pour désembrouiller durant une période de temps donné le signal audiovisuel reçu, des seconds messages (EMM) comprenant chacun des informations d'allocation de droits de l'utilisateur,
- de décryptage dans le décodeur, ou un objet portable qui lui est associé, des premiers messages pour produire des mots de contrôle (CW) pour le désembrouillage dudit signal audiovisuel reçu par le décodeur (11) si l'utilisateur est autorisé à accéder aux informations contenues dans celui-ci,
**caractérisé par** l'émission de troisièmes messages hybrides (E3M) résultant chacun de la combinaison d'au moins un mot de contrôle crypté, d'une adresse de décodeur et d'une information de révocation de droits.

2. Procédé selon la revendication 1, dans lequel, dans un message hybride (E3M), le mot de contrôle (CW) est crypté par une clé d'exploitation différente de la clé unique utilisée pour crypter l'adresse de décodeur et l'information de révocation de droits.

3. Procédé selon la revendication 1, dans lequel on utilise une cryptographie asymétrique.

4. Système de télévision à péage comprenant une unité de gestion des abonnés (20) qui stocke les identifiants des abonnés et leurs droits, une unité de chiffrement de messages EMM (21), un système d'autorisation d'abonnés (22) commandé par l'unité de gestion d'abonnés (20), un compresseur MPEG des programmes audiovisuels (23), une unité de chiffrement de messages ECM (24), un embrouilleur / multiplexeur (25), au moins un décodeur (26) associé à une carte à puce (27), un serveur de communication (30), un superviseur (31), et une liaison (32) entre l'embrouilleur / multiplexeur (25) et les décodeurs (26), **caractérisé en ce qu'**il comprend une unité de combinaison de champs de messages EMM et de champs de messages ECM qui comporte, pour chaque canal de programme audiovisuel à péage, une file d'attente de messages EMM de révocation (40) et un multiplexeur (41), cette unité de combinaison de champs étant disposée à l'entrée de l'embrouilleur / multiplexeur (25).

5. Carte à puce **caractérisée en ce qu'**elle est spécialement adaptée pour traiter des messages hybrides (E3M) transmis vers un décodeur et résultant chacun de la combinaison d'au moins un mot de contrôle crypté, d'une adresse de décodeur et d'une information de révocation de droits, la carte à puce comprenant à cet effet des moyens pour effacer des droits inscrits dans sa mémoire, et décrypter les mots de contrôle cryptés avec une clé d'exploitation courante pour produire des mots de contrôle.

6. Décodeur **caractérisée en ce qu'**il est spécialement adapté pour traiter des messages hybrides (E3M) transmis vers lui et résultant chacun de la combinaison d'au moins un mot de contrôle crypté, d'une adresse de décodeur et d'une information de révocation de droits, le décodeur comprenant à cet effet des moyens pour effacer des droits inscrits dans sa mémoire, et décrypter les mots de contrôle cryptés avec une clé d'exploitation courante pour produire des mots de contrôle.

7. Message transmis à destination d'au moins un décodeur dans un système de télévision à péage comprenant au moins :
- un champ de mot de contrôle crypté, un mot de contrôle étant destiné à désembrouiller durant une période de temps donné un signal audiovisuel reçu par le décodeur;
- un champ d'adresse de décodeur, et
- un champ de révocation de droits allouées à un (ou à des) décodeur(s) adressé(s) par une adresse dans ledit champ d'adresse.

8. Procédé de révocation de droits d'accès à un programme audiovisuel reçu par un décodeur (11) comprenant les étapes :
- de réception de deux types de messages dans le décodeur, des premiers messages (ECM) contenant des mots de contrôle cryptés, chaque mot de contrôle (CW) étant utilisé pour désembrouiller durant une période de temps donné le signal audiovisuel reçu, des seconds messages (EMM) comprenant chacun des informations d'allocation de droits de l'utilisateurs,
- de décryptage dans le décodeur, ou un objet portable qui lui est associé, des premiers messages pour produire des mots de contrôle (CW) pour le désembrouillage dudit signal audiovisuel reçu par le décodeur (11) si l'utilisateur est autorisé à accéder aux information contenues dans celui-ci,
**caractérisé par** la réception de troisièmes messages hybrides (E3M) résultant chacun de la combinaison d'au moins un mot de contrôle crypté, d'une adresse de décodeur et d'une information de révocation de droits.

## Claims

1. A method for revoking rights of access to an audiovisual program received by a decoder (11) comprising the steps:
Transmitting two types of messages to the decoder, first messages (ECM) containing encrypted control words, each control word (CW) being utilized for descrambling for a given period of time the audiovisual signal received, second messages (EMM) each comprising information allocating user rights,
decrypting in the decoder, or an associated portable object, the first messages to produce control words (CW) for descrambling said audiovisual signal received by the decoder (11) if the user is authorized to access the information contained in the latter,
**characterized by** the transmission of third hybrid messages (E3M), each resulting from the combination of at least one encrypted control word, a decoder address and right revoking information.

2. The method according to claim 1, in which, in a hybrid message (E3M), the control word (CW) is encrypted by an exploitation key that is different from the unique key utilized to encrypt the decoder address and the right revoking information.

3. The method according to claim 1, in which asymmetrical cryptography is utilized.

4. A pay television system comprising a subscriber management unit (20) that stores the identifiers of subscribers and their rights, an EMM message encryption unit (21), a subscriber authorization system (22) controlled by the subscriber management unit (20), a MPEG compressor for audiovisual programs (23), an ECM message encryption unit (24), a scrambler/multiplexer (25), at least one decoder (26) associated with a smart card (27), a communication server (30), a supervisor (31), and a connection (32) between the scrambler/multiplexer (25) and the decoders (26) **characterized in that** the system comprises an EMM message field and ECM message field combination unit that comprises, for each channel of the pay audiovisual program, a message queue for EMM revoking messages (40) and a multiplexer (41), each field combination unit being disposed at the input of the scrambler/multiplexer (25).

5. Smart card **characterized in that** it is specially adapted for processing hybrid messages (E3M) transmitted to a decoder and each resulting from the combination of at least one encrypted control word, a decoder address and a rights revoking information, the smart card comprising for that purpose means for deleting rights recorded in its memory and decrypting encrypted control words with a current exploitation key to produce control words.

6. Decoder **characterized in that** it is specially adapted for processing hybrid messages (E3M) transmitted to it and each resulting from the combination of at least one encrypted control word, a decoder address and a rights revoking information, the decoder comprising for that purpose means for deleting rights recorded in its memory, and decrypting encrypted control words with a current exploitation key to produce control words.

7. A message transmitted to the destination of at least one decoder in a pay television system comprising at least:
An encrypted control word field, a control word being designed to descramble for a given period of time an audiovisual signal received by the decoder,
A decoder address field, and
A rights revoking field allocated to one (or more) decoder(s) sent by an address in said address field.

8. The method for revoking rights of access to an audiovisual program received by a decoder (11) comprising the steps:
Receiving of two types of messages in the decoder, the first messages (ECM) containing encrypted control words, each control word (CW) being utilized to descramble for a given period of time the audiovisual signal received, the second messages (EMM) each comprising information allocating user rights,
decrypting in the decoder, or an associated portable object, the first messages to produce control words (CW) for descrambling said audiovisual signal received by the decoder (11) if the user is authorized to access the information contained in the latter,
**characterized by** the reception of third hybrid messages (E3M) each resulting from the combination of an encrypted control word, a decoder address and rights revoking information.

## Patentansprüche

1. Verfahren zur Rücknahme von Zugangsrechten zu einem von einem Decodierer (11) empfangenen audiovisuellen Programm, umfassend die Schritte:
- der Sendung von zwei Typen von Nachrichten zum Decodierer, wobei erste Nachrichten (ECM) verschlüsselte Kontrollwörter enthalten, wobei jedes Kontrollwort (CW) verwendet wird, um das empfangene audiovisuelle Signal während eines gegebenen Zeitraums zu entwürfeln, und zweite Nachrichten (EMM) jeweils Informationen der Zuteilung von Rechten des Benutzers umfassen,
- der Entschlüsselung der ersten Nachrichten im Decodierer oder einem ihm zugeordneten tragbaren Objekt, um Kontrollwörter (CW) für die Entwürfelung des vom Decodierer (11) empfangenen Signals zu erzeugen, wenn der Benutzer berechtigt ist, auf die in diesem enthaltenen Informationen zuzugreifen,
**gekennzeichnet durch** die Sendung von dritten hybriden Nachrichten (E3M), die sich jeweils aus der Kombination mindestens eines verschlüsselten Kontrollworts, einer Decodiereradresse und einer Information der Rücknahme von Rechten ergeben.

2. Verfahren nach Anspruch 1, bei dem das Kontrollwort (CW) in einer hybriden Nachricht (E3M) durch einen Auswertungsschlüssel verschlüsselt wird, der von dem zum Verschlüsseln der Decodiereradresse und der Information der Rücknahme von Rechten verwendeten gemeinsamen Schlüssel verschieden ist.

3. Verfahren nach Anspruch 1, bei dem man eine asymmetrische Verschlüsselung verwendet.

4. Zahl-Fernsehsystem, umfassend eine Teilnehmerverwaltungseinheit (20), die die Identifizierungen der Teilnehmer und ihre Rechte speichert, eine Einheit zum Chiffrieren von EMM-Nachrichten (21), ein durch die Teilnehmerverwaltungseinheit (20) gesteuertes Teilnehmerautorisierungssystem (22), einen MPEG-Kompressor für die audiovisuellen Programme (23),eine Einheit zum Chiffrieren von ECM-Nachrichten (24), einen Verwürfler/Multiplexer (25), mindestens einen einer Chipkarte (27) zugeordneten Decodierer (26), einen Kommunikationsserver (30), einen Supervisor (31) und eine Verbindung (32) zwischen dem Verwürfler/Multiplexer (25) und den Decodierern (26), **dadurch gekennzeichnet, dass** es eine Einheit zum Kombinieren von EMM-Nachrichtenfeldern und von ECM-Nachrichtenfeldern umfasst, die für jeden audiovisuellen Zahl-Programmkanal eine Warteschlange für EMM-Rücknahmenachrichten (40) und einen Multiplexer (41) aufweist, wobei diese Einheit zum Kombinieren von Feldern am Eingang des Verwürflers/Multiplexers (25) angeordnet ist.

5. Chipkarte, **dadurch gekennzeichnet, dass** sie speziell dafür ausgelegt ist, hybride Nachrichten (E3M) zu verarbeiten, die zu einem Decodierer übertragen werden und sich jeweils aus der Kombination mindestens eines verschlüsselten Kontrollworts, einer Decodiereradresse und einer Information der Rücknahme von Rechten ergeben, wobei die Chipkarte zu diesem Zweck Mittel zum Löschen der in ihren Speicher eingeschriebenen Rechte und zum Entschlüsseln der mit dem gängigen Auswertungsschlüssel verschlüsselten Kontrollwörter umfasst, um Kontrollwörter zu erzeugen.

6. Decodierer, **dadurch gekennzeichnet, dass** er speziell dafür ausgelegt ist, hybride Nachrichten (E3M) zu verarbeiten, die ihm übertragen werden und sich jeweils aus der Kombination mindestens eines verschlüsselten Kontrollworts, einer Decodiereradresse und einer Information der Rücknahme von Rechten ergeben, wobei der Decodierer zu diesem Zweck Mittel umfasst, um in seinen Speicher eingeschriebene Rechte zu löschen und die mit dem gängigen Auswertungsschlüssel verschlüsselten Kontrollwörter zu entschlüsseln, um Kontrollwörter zu erzeugen.

7. Zu mindestens einem Decodierer übertragene Nachricht in einem Zahl-Fernsehsystem, umfassend mindestens:
- ein verschlüsseltes Kontrollwortfeld, wobei ein Kontrollwort dazu bestimmt ist, während eines gegebenen Zeitraums ein von dem Decodierer empfangenes audiovisuelles Signal zu entwürfeln;
- ein Decodiereradressenfeld, und
- ein Feld der Rücknahme von Rechten, die einem oder mehreren Decodierern zugeteilt sind, der bzw. die durch eine Adresse in diesem Adressfeld adressiert ist bzw. sind.

8. Verfahren zur Rücknahme von Zugangsrechten zu einem von einem Decodierer (11) empfangenen audiovisuellen Programm, umfassend die Schritte:
- des Empfangs von zwei Typen vonNachrichten in dem Decodierer, wobei erste Nachrichten (ECM) verschlüsselte Kontrollwörter enthalten, wobei jedes Kontrollwort (CW) verwendet wird, um während eines gegebenen Zeitraums das empfangene audiovisuelle Signal zu entwürfeln, und zweite Nachrichten (EMM) jeweils Informationen der Zuteilung von Rechten des Benutzers umfassen,
- der Entschlüsselung der ersten Nachrichten in dem Decodierer oder einem ihm zugeordneten tragbaren Objekt, um Kontrollwörter (CW) für die Entwürfelung des von dem Decodierer (11) empfangenen audiovisuellen Signals zu erzeugen, wenn der Benutzer autorisiert ist, auf die in diesem enthaltenen Informationen zuzugreifen,
**gekennzeichnet durch** den Empfang von dritten hybriden Nachrichten (E3M), die sich jeweils aus der Kombination mindestens eines verschlüsselten Kontrollworts, einer Decodiereradresse und einer Information der Rücknahme von Rechten ergeben.
